# EUROPÄISCHE PATENTANMELDUNG

(11) **EP 2 977 252 A1**
(43) Veröffentlichungstag der Anmeldung: **27.01.2016**
(21) Anmeldenummer: 15173062.9
(22) Anmeldetag: 22.06.2015
(51) Int. Cl.: B60K 17/28, F16H 37/02

(54) **NEBENABTRIEB EINES NUTZFAHRZEUGES FÜR EINE ZAPFWELLE**

(30) Priorität: 24.07.2014 DE 102014214477
(71) Anmelder: ZF Friedrichshafen AG, 88046 Friedrichshafen (DE)
(72) Erfinder: Reick, Benedikt, 88045 Friedrichshafen (DE); Warth, Viktor, 88048 Friedrichshafen (DE); Nitsch, Matthias, 88048 Friedrichshafen (DE); Bauer, Christoph, 94575 Windorf (DE); Igl, Stefan, 94474 Vilshofen (DE); Reisch, Matthias, 88214 Ravensburg (DE)

(57) **Zusammenfassung**

Die Erfindung betrifft Nebenabtrieb eines Nutzfahrzeuges mit Fahrmotor für einen stufenlosen Antrieb einer Zapfwelle.

Es wird ein Zapfwellengetriebe (1) mit einer Getriebeeingangswelle (2) und einer Getriebeausgangswelle (3) vorgeschlagen, wobei auf der Getriebeeingangswelle (2) ein mechanischer Variator (8) und zwischen der Getriebeeingangswelle (2) und der Getriebeausgangswelle (3) mindestens eine Übersetzungsstufe (9, 10) angeordnet sind.

## Beschreibung

Die Erfindung betrifft einen Nebenabtrieb eines Nutzfahrzeuges mit Fahrmotor für einen stufenlosen Antrieb einer Zapfwelle.

Nebenabtriebe bei Nutzfahrzeugen, beispielsweise Landfahrzeugen, kommunalen Fahrzeugen oder Baufahrzeugen sind bekannt, auch unter der Bezeichnung PTO (Power Take Off). Der Nebenabtrieb dient dem Antrieb einer oder mehrerer Zapfwellen, welche für den Antrieb von Anbaugeräten benötigt werden. Der Nebenabtrieb umfasst in der Regel mindestens ein Getriebe, welches im Antriebsstrang zwischen dem Fahrmotor des Nutzfahrzeuges und der Zapfwelle angeordnet ist.

Durch die DE 101 45 643 C1 wurde ein Nebenabtrieb für eine Zapfwelle an einem Landfahrzeug bekannt, bei welchem sich ein Fahrmotor im Bereich der Vorderachse und die Zapfwelle im Bereich hinter der Hinterachse befinden. Zum Antrieb der Zapfwelle ist in den Antriebsstrang zwischen Fahrmotor und Zapfwelle ein so genanntes CVT-Getriebe, d. h. ein Stufenlosgetriebe geschaltet, welches die Zapfwelle über eine Zwischenwelle antreibt. Die Drehzahl der Zapfwelle wird also allein durch die stufenlos variierbare Übersetzung des CVT-Getriebes bestimmt.

Durch die DE 103 28 485 A1 der Anmelderin wurde ein Nebenabtrieb für ein Nutz- oder Landfahrzeug bekannt, wobei zwischen dem Motor des Fahrzeuges und einer Zapfwelle mindestens zwei parallel zueinander geschaltete Getriebe, nämlich ein Schaltgetriebe und ein CVT-Getriebe oder zwei unterschiedliche CVT-Getriebe vorgesehen sind. Den beiden parallel geschalteten Getrieben ist ein als Schaltmatrix bezeichnetes Getriebe nachgeschaltet, welches die Ausgangsleistungen der beiden Getriebe auf verschiedene Abtriebe, unter anderem auf die Zapfwelle verteilt. Die Zapfwelle ist somit entweder über das Schaltgetriebe oder über das CVT-Getriebe antreibbar.

Es ist Aufgabe der vorliegenden Erfindung, einen Nebenabtrieb der eingangs genannten Art vorzuschlagen, wobei ein möglichst geringer Bauraum für den Einbau im Nutzfahrzeug beansprucht wird.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist als Nebenabtrieb ein Zapfwellengetriebe vorgesehen, welches eine Getriebeeingangswelle und eine Getriebeausgangswelle, einen auf der Getriebeeingangswelle angeordneten Variator und mindestens eine zwischen der Getriebeeingangswelle und der Getriebeausgangswelle angeordnete Übersetzungsstufe aufweist. Unter dem Begriff Variator soll hier ein vorzugsweise mechanisches stufenloses Getriebe verstanden werden. Damit ergibt sich der Vorteil eines kompakten, stufenlos regelbaren und unter Last schaltbaren Getriebes zum Antrieb der Zapfwelle, d. h. die Drehzahl der Zapfwelle ist unabhängig von der Drehzahl des Fahrmotors. In vorteilhafter Weise können so Drehzahlschwankungen des Fahrmotors, beispielsweise durch kurzfristige Laständerungen, ausgeglichen werden, sodass an der Zapfwelle permanent die gewünschte (Nenn-) Drehzahl anliegt. Darüber hinaus können eventuell vorhandene Unter-/Übersetzungsstufen in den Anbaugeräten entfallen, da nun an der Zapfwelle die gewünschte Drehzahl stufenlos bereitgestellt werden kann. Bislang war es erforderlich auf einheitliche Nenndrehzahlen zurückzugreifen. Darüber hinaus wird durch die Anordnung des Variators auf der Getriebeeingangswelle und die nachgeschaltete Untersetzung der Vorteil erreicht, dass der Variator mit höherer Drehzahl, d. h geringerem Drehmoment beaufschlagt wird, was eine kleinere Dimensionierung, verbunden mit einem Gewichtsvorteil, erlaubt. Durch die nachgeschaltete mindestens eine Übersetzungsstufe wird die Drehzahl des Fahrmotors auf das Niveau der Zapfwellendrehzahl untersetzt.

Nach einer bevorzugten Ausführungsform weist der Variator eine koaxiale Bauweise auf, d. h. der Variatoreingang und der Variatorausgang sind koaxial zur Getriebeeingangswelle angeordnet, wobei der Variator als Reibradgetriebe ausgebildet ist. Reibradgetriebe, auch Wälzgetriebe genannt, übertragen die Leistung durch punkt- oder linienförmige Berührung zwischen Reibkörpern, welche beispielsweise kegelförmig, doppelkegelförmig oder als Torus - so genannte Toroidgetriebe - ausgebildet sein können.

Nach einer weiteren bevorzugten Ausführungsform ist das Reibradgetriebe als Planetengetriebe mit drei Wellen ausgebildet. Damit wird der Vorteil einer koaxialen Bauweise erreicht.

Nach einer weiteren bevorzugten Ausführungsform weist das Planetengetriebe als Reibräder ausgebildete Planetenräder auf, wobei die Reibräder zumindest bereichsweise kegelförmig ausgebildet sind. Damit ergeben sich unterschiedliche stufenlos veränderbare Reibradien.

Nach einer weiteren bevorzugten Ausführungsform erlaubt der Variator eine Drehrichtungsumkehr, wodurch ein Wendegetriebe entfällt und Bauraum eingespart wird.

Nach einer weiteren bevorzugten Ausführungsform ist zusätzlich zu der Getriebeeingangs- und -ausgangswelle eine weitere Getriebewelle, eine Zwischenwelle, vorgesehen, sodass die Gesamtübersetzung auf zwei Teilübersetzungen auf drei Getriebewellen aufgeteilt werden kann. Hieraus ergibt sich eine kompakte Bauweise für das Zapfwellengetriebe.

Nach einer weiteren bevorzugten Ausführungsform sind die Übersetzungsstufen als Stirnradstufen ausgebildet, womit ein relativ hoher Wirkungsgrad erreicht wird.

Nach einer weiteren bevorzugten Ausführungsform ist die Getriebeeingangswelle vom Fahrmotor antreibbar, wobei zwischen dem Fahrmotor und der Getriebeeingangswelle, also dem Zapfwellengetriebe eine Schaltkupplung vorgesehen ist, welche das Zu- und Abschalten des Nebenabtriebes erlaubt.

Nach einer weiteren bevorzugten Ausführungsform ist das Zapfwellengetriebe im Bereich der Hinterachse des Nutzfahrzeuges und damit auch im Bereich der Zapfwelle angeordnet. Das erfindungsgemäße Zapfwellengetriebe mit stufenloser

Übersetzungsregelung und untersetzter Motordrehzahl kann somit ohne zusätzlichen Bauraumaufwand, d. h. bauraumneutral im Nutzfahrzeug eingebaut werden - d. h. an die Stelle eines herkömmlichen viergängigen Schaltgetriebes.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen:
- Fig. 1: ein erstes Ausführungsbeispiel der Erfindung für ein Zapfenwellengetriebe mit drei Wellen, (ohne die Welle im Variator)
- Fig. 2: ein zweites Ausführungsbeispiel der Erfindung für ein Zapfwellengetriebe mit zwei Wellen, (ohne die Welle im Variator)
- Fig. 3: das Zapfwellengetriebe gemäß Fig. 1 in einer konstruktiven Ausführung in einer Ansicht von vorn und
- Fig. 4: das Zapfwellengetriebe gemäß Fig. 3 in einer Seitenansicht.

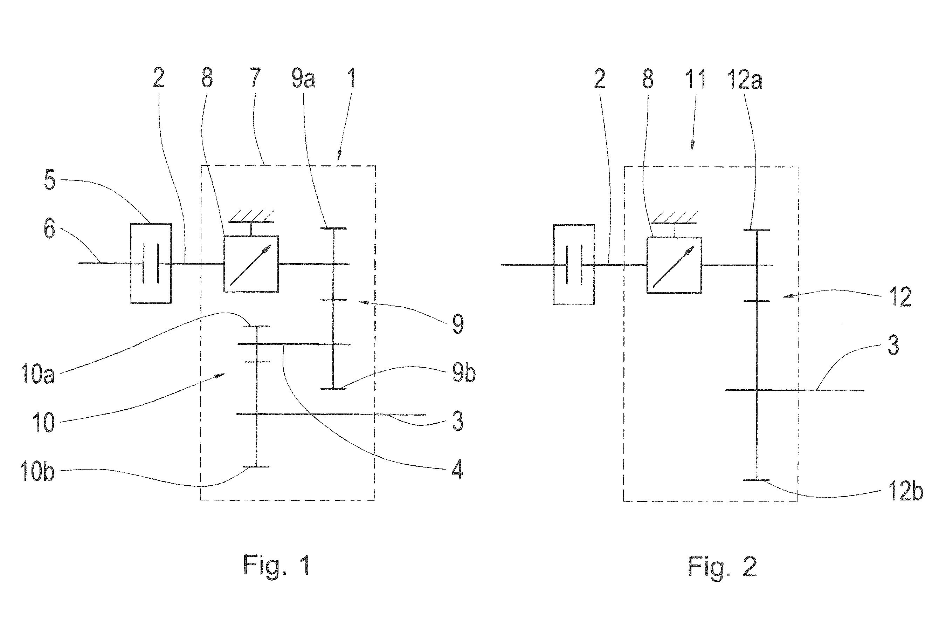

Fig. 1 zeigt in schematischer Darstellung ein erstes Ausführungsbeispiel der Erfindung für ein Zapfwellengetriebe 1, welches Teil eines Nebenabtriebes eines Nutzfahrzeuges, z. B. eines kommunalen Fahrzeuges ist. Das Zapfwellengetriebe 1 weist insgesamt drei Wellen auf, nämlich eine Getriebeeingangswelle 2, eine Getriebeausgangswelle 3 und eine weitere Getriebewelle 4, auch Zwischenwelle 4 genannt. Die Getriebeeingangswelle 2 ist über eine Schaltkupplung 5 mit einer vom nicht dargestellten Fahrmotor des Nutzfahrzeuges angetriebenen Antriebswelle 6, auch Nebenabtriebswelle 6 genannt, verbunden. Die Getriebeabtriebswelle 3 entspricht der Zapfwelle. Die Getriebeeingangswelle 2, die Getriebeausgangswelle 3 sowie die Zwischenwelle 4 sind in einem Getriebegehäuse 7 angeordnet und gelagert. Auf der Getriebeeingangswelle 2 ist ein mechanischer Variator 8, d. h. ein stufenloses Getriebe in koaxialer Bauweise angeordnet, welches hier nur symbolhaft dargestellt ist. Nach einer bevorzugten Ausführungsform ist der Variator 8 als Reibradgetriebe ausgebildet. Der Variator 8 ist vorzugsweise als Planetengetriebe mit als Reibkörpern ausgebildeten Planetenrädern ausgebildet, wobei die Planetenräder beziehungsweise die Reibkörper, zum Beispiel kegelförmig, das heißt mit unterschiedlichen Durchmessern versehen, ausgeführt sind. Durch die Verschiebbarkeit der Kontaktstellen zwischen Sonnenrad und Planetenrad beziehungsweise zwischen Planetenrad und Hohlrad kann eine variable Übersetzung realisiert werden. Somit verbindet die Ausführung des Variators 8 in der gerade beschriebenen Art die Vorteile eines Stufenlosgetriebes (variable Übersetzung) mit denen eines Planetengetriebes, inklusive einer Drehrichtungsumkehr. Hierzu sind in bekannter Weise die Wellen des Planetengetriebes abzubremsen beziehungsweise festzusetzen. Zwischen der Getriebeeingangswelle 2 und der Zwischenwelle 4 ist eine erste Übersetzungsstufe 9, bestehend aus den Stirnrädern 9a, 9b, angeordnet; zwischen der Zwischenwelle 4 und der Getriebeausgangswelle 3 ist eine zweite Übersetzungsstufe 10, bestehend aus den Stirnrädern 10a, 10b angeordnet. Durch beide Übersetzungsstufen wird eine Untersetzung zwischen den Drehzahlen der Getriebeeingangswelle 2 und der Getriebeausgangswelle 3 erreicht; nach einer bevorzugten Auslegung beträgt die Gesamtübersetzung i_{ges} = 1,84, und die Spreizung des Variators 8 beträgt bevorzugt 2,53.

Fig. 2 zeigt ein zweites Ausführungsbeispiel der Erfindung für ein Zapfwellengetriebe 11, welches sich gegenüber dem ersten Ausführungsbeispiel gemäß Fig. 1 dadurch unterscheidet, dass die Zwischenwelle 4 in Fig. 1 entfallen und die Gesamtübersetzung in einer Übersetzungsstufe untergebracht ist. Gleiche oder analoge Teile werden in Fig. 2 mit den gleichen Bezugsziffern wie in Fig. 1 bezeichnet. Auf der Getriebeeingangswelle 2 ist der Variator 8 angeordnet. Zwischen der Getriebeeingangswelle 2 und der Getriebeausgangswelle 3 (Zapfwelle) ist eine Übersetzungsstufe 12, bestehend aus zwei Stirnrädern 12a, 12b, angeordnet. Die Gesamtübersetzung i_{ges} entspricht der des ersten Ausführungsbeispieles.

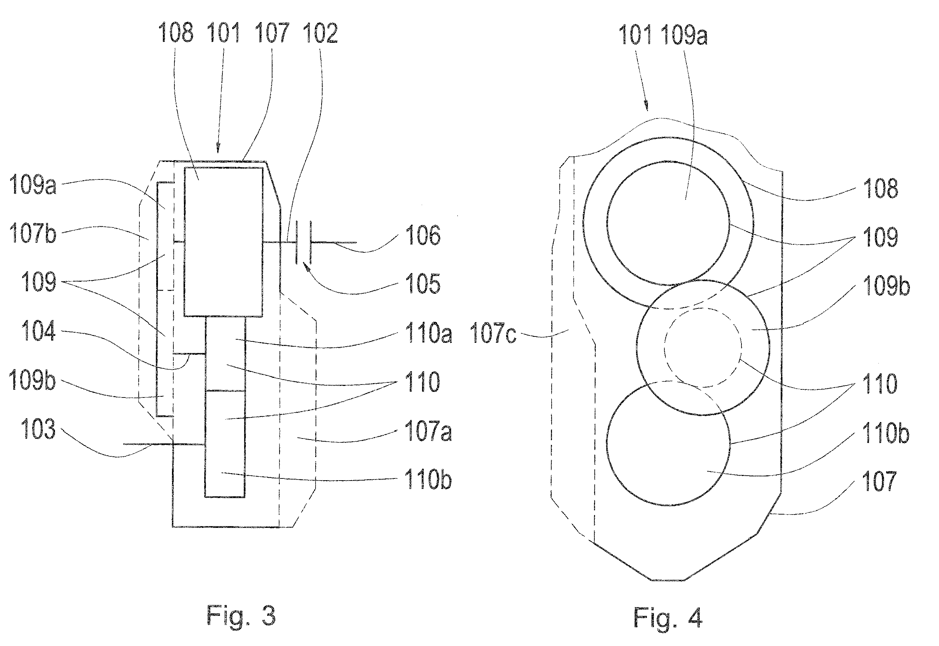

Fig. 3 zeigt eine konstruktive Ausführungsform eines Zapfwellengetriebes 101, welches im Aufbau dem Zapfwellengetriebe 1 gemäß Fig. 1 entspricht. Gleiche oder analoge Teile sind mit um 100 erhöhten Bezugszahlen gegenüber Fig. 1 bezeichnet. Das Getriebegehäuse 107 entspricht bezüglich seines umbauten Raumes im Wesentlichen einem bekannten Seriengehäuse, in welchem ein konventionelles viergängiges Schaltgetriebe als Zapfwellengetriebe aufgenommen ist. Das Getriebegehäuse 107 weist auf der in der Zeichnung rechten Seite einen gestrichelten trapezförmigen Bereich 107a und auf der linken Seite einen gestrichelten trapezförmigen Bereich 107b auf. Der Bereich 107a entspricht der Ausbildung des Seriengehäuses und kann bei Einbau des erfindungsgemäßen Getriebes wegfallen, dagegen käme der Bereich 107b, welcher die erste Übersetzungsstufe 109 umgibt, hinzu. Insgesamt weisen somit das bekannte Seriengetriebe und das erfindungsgemäße Zapfwellengetriebe 101 ungefähr den gleichen Bauraum auf, d. h. der Einbau des erfindungsgemäßen Zapfwellengetriebes 101 ist bauraumneutral. Das Zapfwellengetriebe 101 wird bevorzugt im Bereich der Hinterachse des Nutzfahrzeuges, d. h. in Fahrtrichtung gesehen etwas hinter der Hinterachse eingebaut. Die Abtriebswelle 103 entspricht der Zapfwelle, und die Nebenabtriebswelle 106 stellt die Verbindung zum nicht dargestellten Fahrmotor her, wobei das Zapfwellengetriebe 101 über die Kupplung 105 zuschaltbar ist. Der Variator 108, der wie oben erwähnt, eine koaxiale Bauweise aufweist, kann bauraumneutral im Getriebegehäuse 107 untergebracht werden.

Fig. 4 zeigt eine Seitenansicht des Zapfwellengetriebes 101, d. h. in Axialrichtung der Getriebewellen gesehen. Durch die dargestellte Anordnung des Variators 108 und der beiden Übersetzungsstufen 109, 110 ergibt sich auch in dieser Ansicht ein Bauraumvorteil, welcher als gestrichelter Bereich dargestellt und mit der Bezugszahl 107c bezeichnet ist.

### Bezugszeichen

- 1: Zapfwellengetriebe
- 2: Getriebeeingangswelle
- 3: Getriebeausgangswelle
- 4: Zwischenwelle
- 5: Kupplung
- 6: Nebenabtriebswelle
- 7: Getriebegehäuse
- 8: Variator
- 9: Übersetzungsstufe 1
- 9a: Stirnrad 1
- 9b: Stirnrad 2
- 10: Übersetzungsstufe 2
- 10a: Stirnrad 3
- 10b: Stirnrad 4
- 11: Zapfwellengetriebe
- 12: Übersetzungsstufe
- 12a: Stirnrad
- 12b: Stirnrad
- 101: Zapfwellengetriebe
- 102: Getriebeeingangswelle
- 103: Getriebeausgangswelle
- 104: Zwischenwelle
- 105: Kupplung
- 106: Nebenabtriebswelle
- 107: Getriebegehäuse
- 108: Variator
- 109: Übersetzungsstufe 1
- 109a: Stirnrad 1
- 109b: Stirnrad 2
- 110: Übersetzungsstufe 2
- 110a: Stirnrad 3
- 110b: Stirnrad 4

## Patentansprüche

1. Nebenabtrieb eines Nutzfahrzeuges mit Fahrmotor für einen stufenlosen Antrieb einer Zapfwelle, **gekennzeichnet durch** ein Zapfwellengetriebe (1, 11, 101) mit einer Getriebeeingangswelle (2, 102) und einer Getriebeausgangswelle (3, 103), wobei auf der Getriebeeingangswelle (2, 102) ein mechanischer Variator (8, 108) und zwischen der Getriebeeingangswelle (2, 102) und der Getriebeausgangswelle (3, 103) mindestens eine Übersetzungsstufe (9, 10, 12, 109, 110) angeordnet sind.

2. Nebenabtrieb nach Anspruch 1, **dadurch gekennzeichnet, dass** der Variator (8, 108) eine koaxiale Bauweise aufweist und als Reibradgetriebe ausgebildet ist.

3. Nebenabtrieb nach Anspruch 2, **dadurch gekennzeichnet, dass** das Reibradgetriebe (8, 108) als Planetengetriebe mit drei Wellen ausgebildet ist.

4. Nebenabtrieb nach Anspruch 3, **dadurch gekennzeichnet, dass** das Planetengetriebe (8, 108) Planetenräder aufweist, die als zumindest bereichsweise kegelförmige Reibräder ausgebildet sind.

5. Nebenabtrieb nach Anspruch 3 oder 4, **dadurch gekennzeichnet, dass** der Variator (8, 108) eine Einrichtung zur Drehrichtungsumkehr aufweist.

6. Nebenabtrieb nach einem der Ansprüche 1 bis 5, **dadurch gekennzeichnet, dass** das Zapfwellengetriebe (1, 101) eine Zwischenwelle (4, 104) aufweist, dass zwischen der Getriebeeingangswelle (2, 102) und der Zwischenwelle (4, 104) eine erste Übersetzungsstufe (9, 109) und zwischen der Zwischenwelle (4, 104) und der Getriebeausgangswelle (3, 103) eine zweite Übersetzungsstufe (10, 110) angeordnet sind.

7. Nebenabtrieb nach einem der Ansprüche 1 bis 6, **dadurch gekennzeichnet, dass** die Übersetzungsstufen (9, 10, 12, 109, 110) als Stirnradstufen ausgebildet sind.

8. Nebenabtrieb nach einem der Ansprüche 1 bis 7, **dadurch gekennzeichnet, dass** die Getriebeeingangswelle (2, 102) vom Fahrmotor über eine Nebenabtriebswelle (6, 106) antreibbar ist, und dass zwischen der Nebenabtriebswelle (6, 106) und der Getriebeeingangswelle (2, 102) eine Schaltkupplung (5, 105) angeordnet ist.

9. Nebenabtrieb nach einem der vorhergehenden Ansprüche, **dadurch gekennzeichnet, dass** das Zapfwellengetriebe (1, 11, 101) in einem Bereich einer Hinterachse des Nutzfahrzeuges angeordnet ist.
